# EUROPÄISCHE PATENTSCHRIFT

(11) **EP 2 203 642 B1**
(45) Veröffentlichungstag und Bekanntmachung des Hinweises auf die Patenterteilung: **01.06.2011**
(21) Anmeldenummer: 07819498.2
(22) Anmeldetag: 31.10.2007
(51) Int. Cl.: F03D 11/00

(54) **WINDENERGIEANLAGE**
WIND-POWER SYSTEM
INSTALLATION ÉOLIENNE

(43) Veröffentlichungstag der Anmeldung: 07.07.2010
(73) Patentinhaber: Powerwind Gmbh, 20537 Hamburg (DE)
(72) Erfinder: FISCHER, Frank, 22609 Hamburg (DE)
(74) Vertreter: Leinweber & Zimmermann
(86) Internationale Anmeldenummer: PCT/EP2007/009466
(87) Internationale Veröffentlichungsnummer: WO 2009/056156

(56) Entgegenhaltungen:
- DE-A1- 10 352 023
- DE-A1-102004 061 391
- US-B1- 7 168 251

## Beschreibung

Die Erfindung bezieht sich auf eine Windenergieanlage mit einem auf dem Boden gegründeten Turm, einer an dessen oberem Ende angeordneten Maschinengondel, die mit einem windangetriebenen Rotor versehen ist, einer die mechanische Rotationsenergie des Rotors in elektrische Energie umwandelnden Einrichtung, die im Innenraum des Turms oder der Maschinengondel mindestens eine Verlustwärme erzeugende Komponente aufweist, und einem Kühlkreislauf, der sich von der Verlustwärme erzeugenden Komponente zu einem der Wärmeübertragung zwischen einem in dem Kühlkreislauf umlaufenden Kühlmittel und der Umgebungsluft dienenden Wärmetauscher erstreckt.

Die die mechanische Rotationsenergie des Rotors in elektrische Energie umwandelnde Einrichtung derartiger Windenergieanlagen weist einen elektrischen Generator und ggf. ein der Drehzahlwandlung zwischen dem Rotor und dem Generator dienendes Getriebe auf. Häufig sind der Generator und das ggf. vorhandene Getriebe im Innenraum der Maschinengondel angeordnet. Weiterhin weist die Einrichtung zumeist einen Umrichter für die von dem Generator erzeugte elektrische Energie sowie eine die gesamte Windenergieanlage und insbesondere den Umrichter steuernde Steuereinheit auf. Diese Komponenten sind häufig im Innenraum des Turms angeordnet. Das Getriebe erzeugt mechanische Verlustwärme, der Generator mechanische und elektrische Verlustwärme, während die übrigen genannten Komponenten elektrische Verlustwärme erzeugen. In Abhängigkeit vom Leistungsbereich der Windenergieanlage ist es erforderlich, mindestens eine der Verlustwärme erzeugenden Komponenten zu kühlen.

Bei einer Windenergieanlage der eingangs genannten Art (EP 1 798 414 A1) besteht der Wärmetauscher des für diese Kühlung vorgesehenen Kühlkreislaufs aus vier Wärmetauschereinheiten, die in einem unteren Bereich des Turms an dessen Außenseite angeordnet sind. Diese Anordnung des Wärmetauschers belastet in unerwünschter Weise den Turm, insbesondere weil der Wärmetauscher verhältnismäßig schwer ist. Darüber hinaus liegt bei dieser Anordnung der Wärmetauscher verhältnismäßig bodennahe an der Außenseite des Turms ungeschützt frei und beeinträchtigt auch den optischen Gesamteindruck der Windenergieanlage. DE 103 52 023 A1 beschreibt die Kühlung eines Steuerschrankes einer Windenergieanlage über einen am Turm der Anlage angeordneten Wärmetauscher. DE 10 2004 061 391 A1 beschreibt die Kühlung von Komponenten einer Windenergieanlage mit Frischluft, die durch den Boden von einem turmfemen Frischlufteinlaß her zugeführt wird.

Der Erfindung liegt die Aufgabe zugrunde, eine Windenergieanlage der eingangs genannten Art dahingehend weiterzubilden, daß durch den Kühlkreislauf bedingte Belastungen und Beeinträchtigungen des Turms weitestgehend vermieden werden.

Erfindungsgemäß wird diese Aufgabe dadurch gelöst, daß an einer von dem Turm räumlich getrennten Seite ein auf dem Boden gegründetes, mit dem Wärmetauscher versehenes Bauwerk vorgesehen ist.

Bei der erfindungsgemäßen Anordnung ist das von dem Turm räumlich getrennte Bauwerk der Träger des Wärmetauschers. Dadurch werden von dem Turm jegliche Belastungen und/oder Beeinträchtigungen, die von dem Wärmetauscher ausgehen können, ferngehalten. Außerdem kann das den Wärmetauscher tragende Bauwerk besonders zweckgerecht für die Aufnahme des Wärmetauschers gestaltet werden. Dabei kann das Bauwerk insbesondere auch für weitere Funktionen ausgebildet werden.

Im Rahmen der Erfindung ist insbesondere vorgesehen, daß mindestens ein das Bauwerk mit dem Innenraum des Turms verbindender Leitungskanal vorgesehen ist, durch den eine dem Vorlauf des Kühlmittels zum Wärmetauscher dienende Vorlaufleitung und/oder eine dem Rücklauf des Kühlmittels vom Wärmetauscher dienende Rücklaufleitung hindurchgeführt ist. Der Leitungskanal oder die Leitungskanäle können in der Richtung der Turmachse durch den Boden hindurch, auf dem der Turm gegründet ist, aus dem Innenraum des Turms herausgeführt werden, so daß keine die Turmwand schwächenden Durchführungen erforderlich sind. Beispielsweise kann der Leitungskanal oder die Leitungskanäle auf besonders einfache Weise dadurch zur Verfügung gestellt werden, daß bei der Gründung des Turms und des Bauwerks entsprechende Leerrohre im Boden verlegt werden, die jeweils durch das Fundament des Turms bzw. des Bauwerks hindurch in den Innenraum des Turms bzw. des Bauwerks geführt werden. Der Durchmesser der Leerrohre kann hinreichend groß bemessen werden, daß darin die Vorlaufleitung bzw. die Rücklaufleitung gegenüber dem Boden wärmeisoliert verlaufen können, wobei insbesondere die in den Leerrohren vorhandene Luft der Wärmeisolation gegenüber dem Boden dient. Für die Vorlaufleitung und die Rücklaufleitung können jeweils getrennte Leitungskanäle bzw. Leerrohre vorgesehen sein. Andererseits ist es auch möglich, bei einer entsprechenden Wahl des Durchmessers die Vorlaufleitung und die Rücklaufleitung gemeinsam in einem einzigen Leitungskanal bzw. Leerrohr unterzubringen.

In einer zweckmäßigen Ausführungsform ist vorgesehen, daß das Bauwerk einen Innenraum und ein darüber angeordnetes Dach aufweist, auf dem der Wärmetauscher angeordnet ist. Bei dieser Gestaltung ist es dann weiterhin zweckmäßig, daß in dem Innenraum ein der Umspannung der von der Windenergieanlage erzeugten elektrischen Energie dienender Transformator angeordnet ist. In diesem Fall bildet das den Wärmetauscher auf seinem Dach tragende Bauwerk gleichzeitig das bei bestimmten Ausführungsformen von Windenergieanlagen bekannte Transformatorhaus, in dem der Transformator untergebracht ist, mit dem die von der Windenergieanlage erzeugte elektrische Energie auf die für ihren Weitertransport geeignete Ausgangsspannung umgespannt wird. Es ist bei dieser Ausgestaltung leicht möglich, auch den Transformator mit dem Kühlkreislauf zu koppeln, da sich letzterer durch das Bauwerk hindurch bis zu dem auf dessen Dach angeordneten Wärmetauscher erstreckt.

Eine andere zweckmäßige Alternative besteht darin, daß das Bauwerk einen von der Umgebungsluft durchströmten Innenraum aufweist, in dem der Wärmetauscher angeordnet ist. Auch bei dieser Alternative ist es weiterhin zweckmäßig, daß das Bauwerk einen weiteren Innenraum aufweist, in dem ein der Umspannung der von der Windenergieanlage erzeugten elektrischen Energie dienender Transformator angeordnet ist. Während bei der erstgenannten Alternative der Wärmetauscher freistehend auf dem Dach des Bauwerks angeordnet ist, ist er bei der zuletzt genannten Alternative in dem Innenraum geschützt untergebracht. Letzterer weist natürlich ausreichende Öffnungen für den Luftaustausch mit der Umgebung auf. Durch seine Unterbringung in dem weiteren Innenraum läßt sich auch hier der Transformator bei Bedarf ohne besonderen Aufwand an den Kühlkreislauf wärmemäßig ankoppeln.

Vorzugsweise sind alle Ausführungsformen der Erfindung derart ausgestaltet, daß in dem Kühlkreislauf eine dem Umlauf des Kühlmittels dienende Kühlmittelpumpe angeordnet ist. Diese Kühlmittelpumpe kann an jedem Ort des Kühlkreislaufes angeordnet sein, vorzugsweise jedoch im Innenraum des Turms oder in dem Bauwerk. Weiterhin ist es zweckmäßig, daß an den Kühlkreislauf ein Druckausgleichsbehälter angeschlossen ist. Durch den Druckausgleichsbehälter werden temperaturbedingte Druckschwankungen ausgeglichen. Auch der Druckausgleichsbehälter kann grundsätzlich an jeder Stelle des Kühlkreislaufs angeordnet werden, zweckmäßigerweise jedoch im Innenraum des Turms oder des Bauwerks, beispielsweise in dem Bereich, in dem auch die Kühlmittelpumpe angeordnet ist.

Gemäß einem weiteren Gedanken der Erfindung ist vorgesehen, daß der Kühlkreislauf wärmemäßig mit einer Heizung gekoppelt ist. Mit dieser Heizung, die nur für eine kleine Heizleistung ausgelegt sein muß, kann verhindert werden, daß die Temperatur des Kühlmittels im Kühlkreislauf zu sehr absinkt, wenn die Windenergieanlage in einer kalten Klimazone aufgestellt ist und für einige Tage stillsteht, so daß keine Verlustwärme anfällt. Ebenso wie bei der Kühlmittelpumpe und dem Druckausgleichsbehälter ist es auch für die Heizung zweckmäßig, wenn sie im Inneren des Turms oder auch im Inneren des Bauwerks angeordnet ist.

Bevorzugt handelt es sich bei dem Kühlmittel um konditioniertes Wasser. Die Konditionierung erfolgt beispielsweise durch einen Zusatz von Glykol, das einen Frostschutz bewirkt.

Bei der zu kühlenden elektrischen Komponente kann es sich insbesondere um einen Umrichter und/oder einen Transformator für die von der Windenergieanlage erzeugte elektrische Energie handeln und/oder um eine Steuereinheit der Windenergieanlage. Üblicherweise sind bei Windenergieanlagen der Umrichter und auch die Steuereinheit auf einer Plattform angeordnet, die im Innenraum des Turms in Bodennähe vorgesehen ist. Der unterhalb dieser Plattform begrenzte Innenraum des Turms, der auch als Turmkeller bezeichnet wird, kann dann zur Aufnahme des Transformators und/oder auch der zur Aufrechterhaltung des Kühlkreislaufes dienenden Komponenten dienen, beispielsweise der Kühlmittelpumpe und/oder des Druckausgleichsbehälters und/oder der Heizung.

In der folgenden Beschreibung werden Ausführungsbeispiele der Erfindung unter Bezugnahme auf die Zeichnung näher erläutert. Hierin zeigt:
Fig. 1 eine erste Ausführungsform in stark schematisierter Darstellung,
Fig. 2 eine zweite Ausführungsform in stark schematisierter Darstellung,
Fig. 3 eine dritte Ausführungsform in stark schematisierter Darstellung, und
Fig. 4 eine vierte Ausführungsform in stark schematisierter Darstellung.

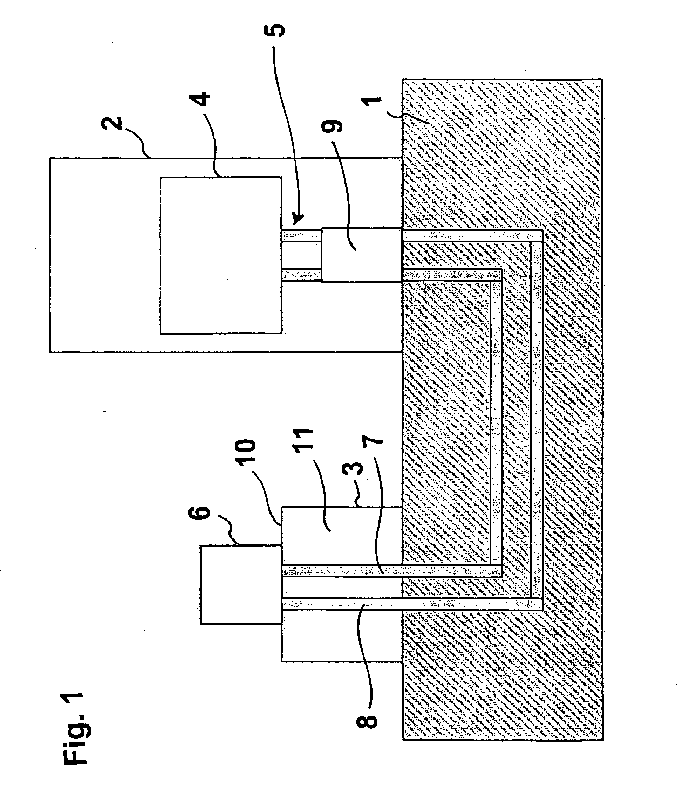

Die Fig. 1 bis 4 zeigen jeweils schematisch einen Vertikalschnitt des Bodens 1 am Standort einer Windenergieanlage sowie deren darauf gegründeten Turm 2 und ein darauf an einer von dem Turm 2 räumlich getrennten Stelle gegründetes Bauwerk 3.

An dem dem Boden 1 entgegengesetzten oberen Ende des Turms 2 ist eine in der schematischen Darstellung nicht gezeigte Maschinengondel angeordnet, die mit einem um eine im wesentlichen horizontale Achse drehbar gelagerten Rotor versehen ist, welcher durch den ihn anströmenden Wind in Drehung versetzt wird. Die mechanische Rotationsenergie des Rotors wird durch eine Einrichtung in elektrische Energie umgewandelt, welche einen von dem Rotor - ggf. über ein drehzahlwandelndes Getriebe - angetriebenen elektrischen Generator aufweist. Die von dem Generator erzeugte elektrische Energie wird in einem Umrichter 4 weiterverarbeitet, der in den Fig. 1 bis 4 jeweils in einem unteren Bereich des Innenraums des Turms 2 auf einer nicht dargestellten Plattform aufgestellt ist, die in einem Abstand über dem Boden 1 angeordnet ist. Auf dieser Plattform können ferner Komponenten einer elektrischen Steuereinrichtung angeordnet sein, welche die gesamte Windenergieanlage steuert.

Bei allen in den Fig. 1 bis 4 dargestellten Ausführungsformen ist zwischen dem Turm 2 und dem Bauwerk 3 ein Kühlkreislauf 5 ausgebildet. Dieser ist an seinem turmseitigen Ende wärmemäßig mit dem Umrichter 4 und ggf. weiteren zu kühlenden Komponenten gekoppelt. An seinem bauwerksseitigen Ende ist der Kühlkreislauf 5 durch einen Wärmetauscher 6 geschlossen. Eine Vorlaufleitung 7 des Kühlkreislaufs 5 transportiert dem Umrichter 4 und den ggf. weiteren Komponenten entzogene Verlustwärme zu dem Wärmetauscher 6, der sie an die Umgebungsluft abgibt. Das dadurch abgekühlte Kühlmittel wird von einer Rücklaufleitung 8 des Kühlkreislaufs 5 von dem Wärmetauscher 6 zu den zu kühlenden Komponenten 4 zurückgeführt.

Schließlich ist bei allen in den Fig. 1 bis 4 dargestellten Ausführungsformen in dem Kühlkreislauf 5 eine Kühlmittelpumpe 9 vorgesehen, die den Umlauf des Kühlmittels im Kühlkreislauf 5 unterstützt. Weiterhin ist im Bereich der Kühlmittelpumpe 9 an den Kühlkreislauf 5 ein in der schematischen Darstellung nicht erkennbarer Druckausgleichsbehälter angeschlossen. Letzterer unterstützt die Anpassung des Kühlkreislaufs 5 an Veränderungen der Betriebsbedingungen, insbesondere der Umgebungstemperatur, bei der die Windenergieanlage betrieben wird. Diesen in Abhängigkeit vom Standort der Windenergieanlage stark unterschiedlichen Umgebungstemperaturen trägt auch eine in der schematischen Darstellung nicht erkennbare Heizung Rechnung, die wärmemäßig mit dem Kühlkreislauf 5 gekoppelt ist und das Kühlmittel auf einer Mindesttemperatur hält, wenn die Windenergieanlage für einen längeren Zeitraum, beispielsweise Tage, stillsteht und deshalb keine in dem Kühlkreislauf 5 transportierte Verlustwärme anfällt. Beispielsweise handelt es sich bei dem Kühlmittel um durch Glykol konditioniertes Wasser, das von dieser Heizung beispielsweise auf einer Mindesttemperatur von 5° C gehalten wird.

Für die praktische Ausführung des Kühlkreislaufs 5 werden bei der Errichtung der Windenergieanlage in der schematischen Darstellung nicht eingezeichnete Leerrohre in den Boden 1 eingelegt, deren eines Ende unter dem Turm 2 in Richtung seiner vertikalen Achse aus dem Boden 1 heraus in den Innenraum des Turms 2 geführt wird und deren anderes Ende unter dem Bauwerk 3 aus dem Boden 1 heraus in den Innenraum des Bauwerks 3 geführt wird. Durch diese Leerrohre, deren Durchmesser deutlich größer als der Durchmesser der Vorlaufleitung 7 und der Rücklaufleitung 8 bemessen wird, werden die Leitungen 7, 8 hindurchgeführt.

Wie bereits erwähnt, ist der vorstehend erläuterte Aufbau bei allen in den Fig. 1 bis 4 dargestellten Ausführungsformen gleich. Diese Ausführungsformen unterscheiden sich lediglich durch die nachstehend erläuterten Gestaltungen:

Bei der Ausführungsform von Fig. 1 ist das Bauwerk 3 ein kleines Haus und der Wärmetauscher 6 auf dem Dach 10 des Hauses im Freien angeordnet. In dem unter dem Dach 10 befindlichen Innenraum 11 des Hauses kann ein der Umspannung der von der Windenergieanlage erzeugten elektrischen Energie dienender Transformator (nicht dargestellt) untergebracht sein. Letzterer kann wärmemäßig an den durch den Innenraum 11 zwischen dem Boden 1 und dem Dach 10 hindurchgeführten Bereich des Kühlkreislaufs 5 angekoppelt sein, so daß letzterer auch eine von dem Transformator erzeugte Verlustleistung abführt. Ferner sind bei der in Fig. 1 dargestellten Ausführungsform die Kühlmittelpumpe 9 und die ggf. vorhandenen weiteren Komponenten, nämlich der Druckausgleichsbehälter und die Heizung, im Innenraum des Turms 2, nämlich im Turmkeller, angeordnet.

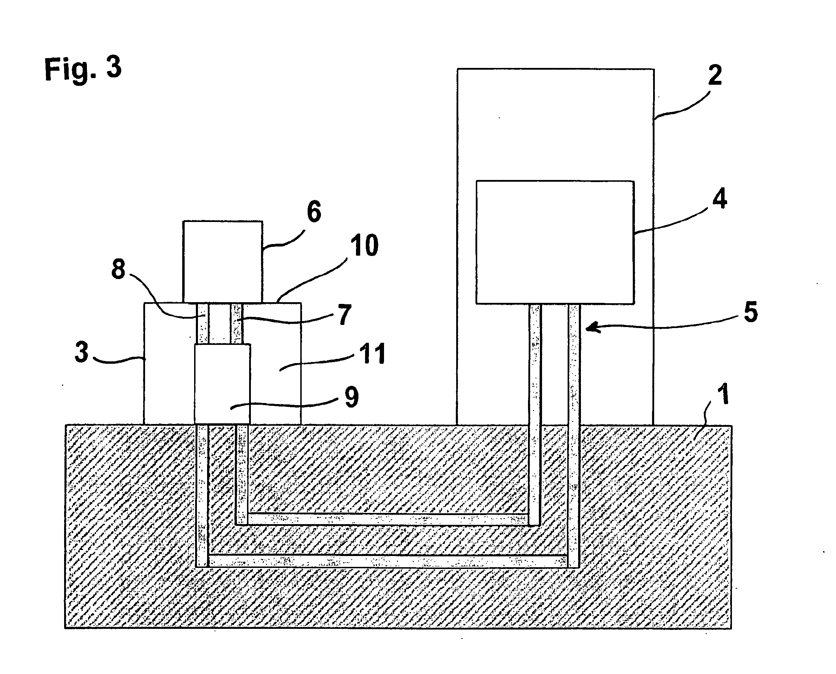

Die Ausführungsform von Fig. 3 unterscheidet sich von der in Fig. 1 dargestellten Ausführungsform lediglich insoweit, als dort die Kühlmittelpumpe 9 und die ggf. vorhandenen weiteren Komponenten nicht im Turmkeller, sondern in dem Innenraum 11 des Bauwerks 3 angeordnet sind.

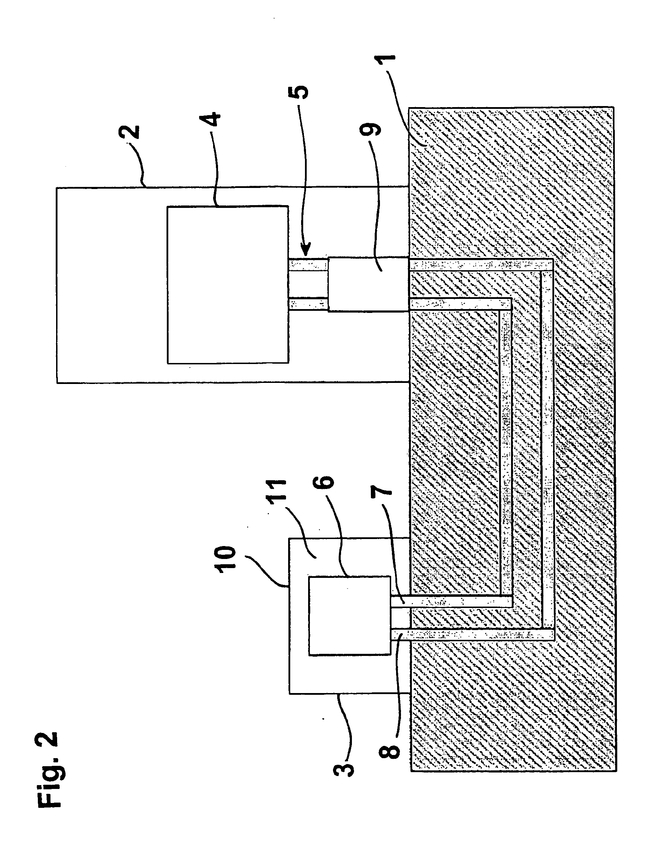

Die Ausführungsform von Fig. 2 unterscheidet sich von der in Fig. 1 dargestellten Ausführungsform lediglich insoweit, als der Wärmetauscher 6 nicht auf dem Dach 10, sondern im Innenraum 11 des Bauwerks 3 angeordnet ist. Dieser Innenraum 11 kann in zwei Räume unterteilt sein, deren einer den Wärmetauscher 6 enthält und in deren anderem der der Umspannung dienende Transformator untergebracht ist. Es versteht sich, daß der den Wärmetauscher 6 aufnehmende Innenraum ausreichend belüftet ist, damit der Wärmetauscher 6 seine Wärmelast an die Umgebungsluft abgeben kann.

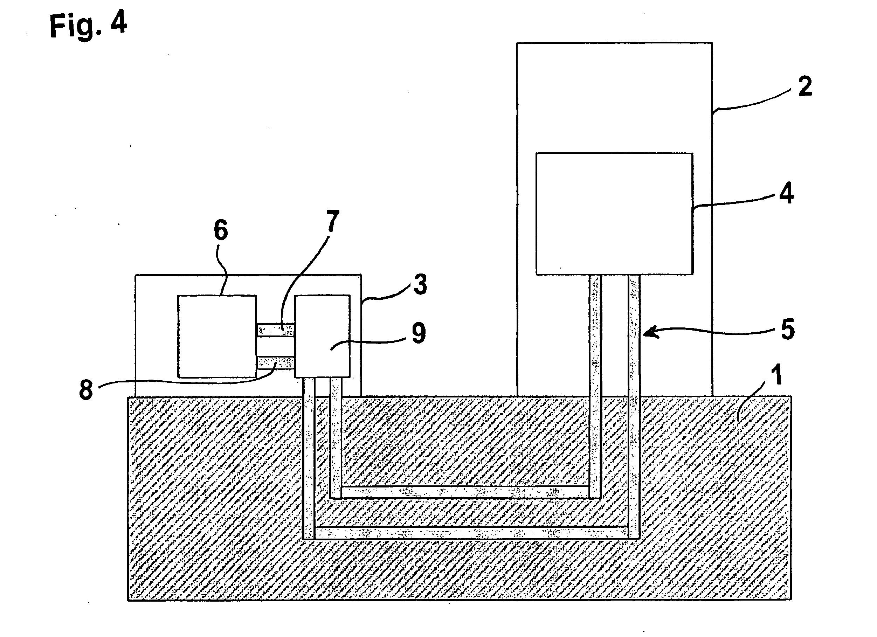

Die Ausführungsform von Fig. 4 unterscheidet sich von der in Fig. 2 dargestellten Ausführungsform lediglich dadurch, daß - wie bei der in Fig. 3 dargestellten Ausführungsform - die Kühlmittelpumpe 9 und die ggf. vorhandenen weiteren Komponenten, nämlich der Druckausgleichsbehälter und die Heizung, nicht im Turmkeller, sondern im Innenraum 11 des Gebäudes 3 untergebracht sind.

## Patentansprüche

1. Windenergieanlage mit einem auf dem Boden (1) gegründeten Turm (2), einer an dessen oberem Ende angeordneten Maschinengondel, die mit einem windangetriebenen Rotor versehen ist, einer die mechanische Rotationsenergie des Rotors in elektrische Energie umwandelnden Einrichtung, die im Innenraum des Turms (2) oder der Maschinengondel mindestens eine Verlustwärme erzeugende Komponente (4) aufweist, und einem Kühlkreislauf (5), der sich von der Verlustwärme erzeugenden Komponente (4) zu einem der Wärmeübertragung zwischen einem in dem Kühlkreislauf (5) umlaufenden Kühlmittel und der Umgebungsluft dienenden Wärmetauscher (6) erstreckt, **dadurch gekennzeichnet, daß** an einer von dem Turm (2) räumlich getrennten Stelle ein auf dem Boden (1) gegründetes, mit dem Wärmetauscher (6) versehenes Bauwerk (3) vorgesehen ist.

2. Windenergieanlage nach Anspruch 1, **dadurch gekennzeichnet, daß** mindestens ein das Bauwerk (3) mit dem Innenraum des Turms (2) verbindender Leitungskanal vorgesehen ist, durch den eine dem Vorlauf des Kühlmittels zum Wärmetauscher (6) dienende Vorlaufleitung (7) und/oder eine dem Rücklauf des Kühlmittels vom Wärmetauscher (6) dienende Rücklaufleitung (8) hindurchgeführt ist.

3. Windenergieanlage nach Anspruch 1 oder 2, **dadurch gekennzeichnet, daß** das Bauwerk (3) einen Innenraum (11) und ein darüber angeordnetes Dach (10) aufweist, auf dem der Wärmetauscher (6) angeordnet ist.

4. Windenergieanlage nach Anspruch 3, **dadurch gekennzeichnet, daß** in dem Innenraum (11) ein der Umspannung der von der Windenergieanlage erzeugten elektrischen Energie dienender Transformator angeordnet ist.

5. Windenergieanlage nach Anspruch 1 oder 2, **dadurch gekennzeichnet, daß** das Bauwerk (3) einen von der Umgebungsluft durchströmten Innenraum (11) aufweist, in dem der Wärmetauscher (6) angeordnet ist.

6. Windenergieanlage nach Anspruch 5, **dadurch gekennzeichnet, daß** das Bauwerk (3) einen weiteren Innenraum aufweist, in dem ein der Umspannung der von der Windenergieanlage erzeugten elektrischen Energie dienender Transformator angeordnet ist.

7. Windenergieanlage nach Anspruch 4 oder 6, **dadurch gekennzeichnet, daß** der Transformator mit dem Kühlkreislauf (5) wärmemäßig gekoppelt ist.

8. Windenergieanlage nach einem der Ansprüche 1 bis 7, **dadurch gekennzeichnet, daß** in dem Kühlkreislauf (5) eine dem Umlauf des Kühlmittels dienende Kühlmittelpumpe (9) angeordnet ist.

9. Windenergieanlage nach einem der Ansprüche 1 bis 8, **dadurch gekennzeichnet, daß** an den Kühlkreislauf (5) ein Druckausgleichsbehälter angeschlossen ist.

10. Windenergieanlage nach einem der Ansprüche 1 bis 9, **dadurch gekennzeichnet, daß** der Kühlkreislauf (5) wärmemäßig mit einer Heizung gekoppelt ist.

11. Windenergieanlage nach einem der Ansprüche 8 bis 10, **dadurch gekennzeichnet, daß** die Kühlmittelpumpe (9) und/oder der Druckausgleichsbehälter und/oder die Heizung im Innenraum des Turms (2) angeordnet sind.

12. Windenergieanlage nach einem der Ansprüche 1 bis 11, **dadurch gekennzeichnet, daß** das Kühlmittel konditioniertes Wasser ist.

13. Windenergieanlage nach einem der Ansprüche 1 bis 12, **dadurch gekennzeichnet, daß** die elektrische Komponente (4) ein Umrichter und/oder ein Transformator für die von der Windenergieanlage erzeugte elektrische Energie und/oder eine Steuereinheit der Windenergieanlage ist.

## Claims

1. A wind-power system having a tower (2) set on the ground (1), a machine gondola disposed on the upper end of said tower and which is provided with a wind-driven rotor, a device converting the mechanical rotational energy of the rotor into electrical energy and which has at least one component (4) producing heat losses in the interior of the tower (2) or the machine gondola, and a cooling circuit (5) which extends from the component (4) producing heat losses to a heat exchanger (6) serving to transmit heat between a coolant circulating in the cooling circuit (5) and the ambient air, **characterised in that** there is provided at a point spatially separated from the tower (2) a building (3) set on the ground (1) and provided with the heat exchanger (6).

2. The wind-power system according to Claim 1, **characterised in that** there is provided at least one line channel connecting the building (3) to the interior of the tower (2) through which a feed line (7) serving to feed the coolant to the heat exchanger (6) and/or a return line (8) serving to return the coolant from the heat exchanger (8) is passed.

3. The wind-power system according to Claim 1 or 2, **characterised in that** the building (3) has an interior (11) and a roof (10) disposed over the latter on which the heat exchanger (6) is disposed.

4. The wind-power system according to Claim 3, **characterised in that** there is disposed in the interior (11) a transformer serving to convert the electrical energy generated by the wind-power system.

5. The wind-power system according to Claim 1 or 2, **characterised in that** the building (3) has an interior (11) through which ambient air flows and in which the heat exchanger (6) is disposed.

6. The wind-power system according to Claim 5, **characterised in that** the building (3) has a further interior in which a transformer serving to convert the electrical energy generated by the wind-power system is disposed.

7. The wind-power system according to Claim 4 or 6, **characterised in that** the transformer is heat-coupled to the cooling circuit (5).

8. The wind-power system according to anv of Claims 1 to 7. **characterised in that** there is disposed in the cooling circuit (5) a coolant pump (9) serving to circulate the coolant.

9. The wind-power system according to any of Claims 1 to 8, **characterised in that** a pressure compensation container is connected to the cooling circuit (5).

10. The wind-power system according to any of Claims 1 to 9, **characterised in that** the cooling circuit (5) is heat-coupled to a heating system.

11. The wind-power system according to any of Claims 8 to 10, **characterised in that** the coolant pump (9) and/or the pressure compensation container and/or the heating system are disposed in the interior of the tower (2).

12. The wind-power system according to any of Claims 1 to 11, **characterised in that** the coolant is conditioned water.

13. The wind-power system according to any of Claims 1 to 12, **characterised in that** the electrical component (4) is a converter and/or a transformer for the electrical energy generated by the wind-power system and/or a control unit of the wind-energy system.

## Revendications

1. Installation éolienne comportant :
une tour (2) érigée sur un sol (1), dont l'extrémité supérieure présente une nacelle moteur pourvue d'un rotor éolien,
un dispositif permettant de transformer l'énergie de rotation mécanique du rotor en énergie électrique et présentant, dans l'espace intérieur de la tour (2) ou de la nacelle moteur, au moins un composant (4) dégageant des pertes de chaleur, et
un circuit de refroidissement (5) s'étendant du composant (4) dégageant des pertes de chaleur jusqu'à un échangeur de chaleur (6) servant à effectuer le transfert de chaleur entre un fluide de refroidissement circulant dans le circuit de refroidissement (5) et l'air ambiant,
**caractérisée en ce qu'**il est prévu, en un emplacement physiquement séparé de la tour (2), une construction (3) érigée sur le sol (1) et pourvue de l'échangeur de chaleur (6).

2. Installation éolienne selon la revendication 1, **caractérisée en ce qu'**il est prévu au moins un canal effectuant la liaison entre la construction (3) et l'espace intérieur de la tour (2), à travers lequel passe une conduite de refoulement (7) servant à refouler le fluide de refroidissement vers l'échangeur de chaleur (6) et/ou une conduite de retour (8) servant à renvoyer le fluide de refroidissement provenant de l'échangeur de chaleur (6).

3. Installation éolienne selon la revendication 1 ou 2, **caractérisée en ce que** la construction (3) présente un espace intérieur (11) surmonté d'un toit (10) sur lequel est disposé l'échangeur de chaleur (6).

4. Installation éolienne selon la revendication 3, **caractérisée en ce qu'**un transformateur servant à la transformation de l'énergie électrique produite par l'installation éolienne se trouve dans l'espace intérieur (11).

5. Installation éolienne selon la revendication 1 ou 2, **caractérisée en ce que** la construction (3) présente un espace intérieur (11) traversé par l'air ambiant et dans lequel est disposé l'échangeur de chaleur (6).

6. Installation éolienne selon la revendication 5, **caractérisée en ce que** la construction (3) présente un espace intérieur supplémentaire dans lequel est disposé un transformateur servant à la transformation de l'énergie électrique produite par l'installation éolienne.

7. Installation éolienne selon la revendication 4 ou 6, **caractérisée en ce que** le transformateur est couplé par voie thermique avec le circuit de refroidissement (5).

8. Installation éolienne selon l'une des revendications 1 à 7, **caractérisée en ce que** le circuit de refroidissement (5) comporte une pompe à fluide de refroidissement (9) servant à la circulation du fluide de refroidissement.

9. Installation éolienne selon l'une des revendications 1 à 8, **caractérisée en ce qu'**un réservoir d'équilibrage de pression est couplé au circuit de refroidissement (5).

10. Installation éolienne selon l'une des revendications 1 à 9, **caractérisée en ce que** le circuit de refroidissement (5) est couplé par voie thermique à un dispositif de chauffage.

11. Installation éolienne selon l'une des revendications 8 à 10, **caractérisée en ce que** la pompe à fluide de refroidissement (9) et/ou le réservoir d'équilibrage de pression et/ou le dispositif de chauffage sont disposés dans l'espace intérieur de la tour (2).

12. Installation éolienne selon l'une des revendications 1 à 11, **caractérisée en ce que** le fluide de refroidissement est de l'eau conditionnée.

13. Installation éolienne selon l'une des revendications 1 à 12, **caractérisée en ce que** le composant électrique (4) est un convertisseur et/ou un transformateur pour l'énergie électrique produite par l'installation éolienne et/ou une unité de commande de l'installation éolienne.
